# EUROPEAN PATENT APPLICATION

(11) **EP 3 586 962 A1**
(43) Date of publication of application: **01.01.2020**
(21) Application number: 18179318.3
(22) Date of filing: 22.06.2018
(51) Int. Cl.: B01L 3/00, G01N 15/14, G01N 21/65

(54) **MAGNETIC SAMPLE HOLDER SYSTEM FOR A RAMAN MICROSCOPE**

(71) Applicant: Unchained Labs Germany GmbH, 12555 Berlin (DE)
(72) Inventor: GOEDE, Karsten, 10249 Berlin (DE)
(74) Representative: Cooley (UK) LLP

(57) **Abstract**

The invention relates to a magnetic sample holder system (10) for Raman microscopy on a Raman microscope, comprising:
- a first element (200), wherein the first element (200) is configured to create a magnetic force,
- at least one second element (400), wherein the second element (400) is magnetic or magnetizable such that, if the first element (200) creates the magnetic force, the second element (400) is fixable or fixed to the sample holder system (10) by means of the magnetic force, and
wherein the at least one second element (400) comprises or is a slide (100) comprising a first (101) and a second surface (102) and a membrane (103), wherein the membrane consists of a magnetic metal.

Furthermore the invention relates to a Raman microscope comprising the magnetic sample holder system (10).

## Description

### Specification

The invention relates to a magnetic sample holder system for a Raman microscope that allows facile handling of samples, such as micro-particles, particularly cells or microbes such as bacteria. The invention also relates to a Raman microscope comprising a sample holder system according to the invention.

In many Raman applications, such as Raman microscopy, Raman spectroscopy or Raman micro-spectroscopy (in the following summarized under the term "Raman microscopy" only), the Raman signature, i.e. the Raman spectrum, of biological samples is determined.

In this context, micro-particles such as cells or microbes are of particular interest.

Various types of microbes often grow in growth media or are present in liquids, such as saliva, blood, ascites, or urine, or they are captured at critical hotspots in (for instance pharmaceutical) factories or the like and transferred to a liquid or a nutrient solution for identification.

Therefore, in order to specifically determine a Raman signature of a specific microbe with high signal-to-noise ratio, the sample suspension has to be filtrated prior the measurement in order to immobilize and to extract the microbes from the liquid.

This is done with dedicated surface filters available with various pore sizes, depending on the size of the microbes.

However, often these filters are not suited for subsequent Raman microscopy, as they intrinsically (due to their substrate) exhibit a Raman signature themselves. As the filter substrate is usually present in much higher concentrations than the micro-particles of interest, the signal of the sample is essentially drowned in the background signal from the filter substrate.

Therefore, the filtered microbes have to be transferred to a suitable sample holder with a suitable (i.e. exhibiting a low Raman signal background) substrate prior to measurement. During this step, the microbes are often damaged and losses of certain particles are unavoidable, which might be prohibitive in sensitive applications In order to circumvent the problem of transfer, Raman-compatible filters have been designed that provide a coating that is thought to minimize the Raman background signal of the filter substrate. However, despite this effort, the filters known from the state of the art still exhibit a comparably high Raman background signal. For instance, it is highly difficult to achieve a sufficient coating also within such filter pores, which is necessary to suppress any contributions to the Raman signal stemming from the holes.

Besides the need for Raman-compatible filters, i.e. very flat surface filters that exhibit a low Raman signal background, there is also a need for sample substrates that exhibit favorable optical and thermal properties with respect to Raman microscopy and that allow cost-efficient manufacturing.

Furthermore, transferring a sample from such a filter to a Raman microscope is elaborate due to a lack of fixing means for fixing such a filter to a sample holder of the Raman microscope.

Therefore, an object of the present invention is to overcome the problems known in the state of the art.

The object is achieved by a Raman compatible sample holder system and a Raman microscope, with a dedicated filter and/or a sample substrate exhibiting favorable optical and thermal properties, wherein the sample holder system can be arranged reliably and without much effort.

The problem according to the invention is solved by a magnetic sample holder system having the features of claim 1. Advantageous embodiments are described in the subclaims.

According to claim 1, a magnetic sample holder system for Raman microscopy, comprises at least the following components:
- a first element, wherein the first element is configured to create a magnetic force,
- at least one second element, wherein the second element is magnetic or magnetizable such that, when the first element creates the magnetic force, the second element is fixable or fixed to the sample holder system by means of the magnetic force, and
wherein the at least one second element comprises or is a slide comprising a first surface, a second surface and a membrane, wherein the membrane consists of a magnetic or magnetizable metal, particularly wherein the membrane is arranged between the first planar surface for receiving a sample and second surface, particularly wherein the first and second surface are arranged particularly opposite of each other on an extensive area of the membrane.

The magnetic sample holder system is configured for a convenient and reliable handling of samples, particularly sparse microbe samples. The magnetic connection mechanism allows for a quick and facile handling of the second element with regard to attaching and fixing the second element to the sample holder system.

The magnetic sample holder system allows for a repeated, fixing and release of the second element that is configured as the sample substrate for the Ramanapplications.

The magnetic sample holder system is arrangeable in the excitation light of a Raman microscope such that the first surface of the second element can be optically evaluated by the microscope optics.

The first and second elements are particularly arranged along a vertical axis of the sample holder system, along which a sample can be excited by Raman-excitation from a Raman-microscope. The first and second element extent mainly along an orthogonal plane with respect to the vertical axis and are particularly stacked along the vertical axis.

The first surface of the slide is particularly arranged such that it is accessible to a Raman-excitation light. Therefore, the first surface faces particularly upwards with respect to a downwards pointing gravitational force.

The magnetic sample holder system particularly comprises a holding device that is configured to receive or that comprises the first and second element at defined positions along the vertical axis such that a predefined or a manually adjustable distance between the first and second element can be maintained. The holding device can be circular, ring-shaped, u-shaped, or a half-ring-shaped, such that it particularly does not block light stemming from the sample or that is used for excitation. Furthermore, the holding device particularly comprises at least one recess for receiving the first and/or the second element.

The first element is particularly arranged permanently in the holding device and is located such that the second element can also be arranged in the holding device.

The holding device can comprise additional features and means that are adapted for a receiving means of a microscope sample holder. These receiving means can be a microscope table or screws for fixing the holding device to a Raman microscope.

The manufacturing process of the slide can be comparably simple, as the slide can be manufactured from a single piece of metal, without further processing steps such as coating.

A micro-particle in the context of the invention is a particle whose outer diameter is in the range of several hundreds of nanometres to several dozens of microns. Thus, particularly microbes that can exhibit outer diameters smaller than one micron, are also considered as micro-particles in the context of the invention.

A magnetic metal in the context of the invention can be both an elementary magnetic metal as well as a magnetic metal alloy.

The first surface of the slide is particularly even and flat, with a comparably low surface roughness and few or no corrugations, which allows for high quality Raman measurements. The first surface is therefore particularly reflective.

The first and/or second surface can be an additional particularly thin layer on the membrane or simply the surface of the membrane, i.e. an integral part of the membrane.

The term "thin" in the context of the invention refers to a layer that is particularly thinner than 1 micron.

The first and/or second surface of the slide might be surface layers comprising a coating of a different material. The first and/or second surface can also be integrally connected to the membrane and can be of the same metal.

The slide is well-suited for Raman-microscopic measurements, particularly because the membrane consists of a metal.

The metallic membrane particularly grants a comparably high thermal conductivity, particularly higher than 50 W/(m·K), more particularly higher than 70 W/(m·K), more particularly higher than 80 W/(m·K) for Raman applications, where the excitation light can cause heating of the membrane.

Also, the comparably high degree of achievable reflectivity of the metallic membrane and/or the first surface is well-suited for Raman applications, as the high degree of reflectivity allows that a large fraction of incoming excitation light is reflected back, so that heating due to absorption processes is minimized.

Furthermore, a high membrane reflectivity advantageously enhances the fraction of Raman-scattered light extending from the particle that can be fed into a microscope objective, thereby increasing the signal.

For example, the reflection coefficient of nickel is greater than 60% at 532 nm, which is higher than most reflection coefficients of slides that do not comprise a metallic membrane.

The sample holder system according to the invention provides a magnetic holder that can comprise an exchangeable second element particularly without pores for the measurement of particles that for example do not need a filtration step but are deposited (for instance by means of centrifugation or deposition of a droplet) directly onto the second element without pores. The sample holder system can additionally or alternatively comprise a second element configured as a filter with pores for micro-particle filtration.

The sample holder system according to the invention is therefore particularly flexible in terms of applications. The second element can be removably arranged on the first element and the second element can be exchanged by another second element that fits just the same to the first element.

The sample holder system can comprise a plurality of second elements, wherein each second element can be formed differently, e.g. as a filter or as a solid substrate.

In the assembled state of the system particularly only one second element is arranged in the sample holder system.

According to another embodiment of the invention, the second element is devoid of any pores or holes, i.e. it is pore free such that filtration is not possible.

Such a second element can be used for direct deposition of sample, without a filtration step.

According to another embodiment of the invention, the second element is a filter designed for surface filtration of a liquid comprising the micro-particles (particularly cells, microbes or bacteria) is disclosed, wherein particularly the filtered micro-particles remain on the surface after filtration, wherein the slide comprises pores extending from the first surface through the membrane to the second surface, wherein the size and shape of the pores on the first surface is such that the micro-particles cannot pass through the pores, and thus particularly remain on the first surface after filtration.

The filter is designed as a surface filter, and particularly not as a volume filter. In contrast to a surface filter, a volume filter is configured to filter particles, wherein the filtered particles remain in the volume and thus, remain inaccessible for Raman measurements.

According to the invention filtered micro-particles remain on the first surface of the slide.

The filter is therefore well-suited for combining a filtration step, where the micro-particles are filtered from a liquid with the subsequent step of a Raman measurement of the micro-particles on the filter, wherein the filter is arranged in the magnetic sample holder system of a Raman-microscope for the measurement.

Thus, the filter combines surface filtration with features of sample substrates suited for Raman microscopy.

According to another embodiment of the invention, the metal is a chemically stable metal or an inert metal, wherein the metal is particularly chemically more stable than polymer films used in other filters for micro-particles.

For example, the metal is chosen from metals that are resistant to aggressive chemical liquids like ethanol, methanol, toluene, acetone, chloroform, various (cleaning) acids or bases, and/or soy oil.

Furthermore, the metal is particularly resistant to heat impact during laser excitation.

According to another embodiment of the invention, the metal of the membrane and particularly the metal of the slide exhibits a high stability with respect to various solvents, particularly wherein the chemical stability of the metal is at least as high as for nickel for the various solvents.

According to another embodiment of the invention, the metal exhibits a comparably low Raman signal background when a Raman measurement is executed.

An exemplary definition for a low Raman background signal is given in the figure description.

According to another embodiment of the invention, an outer diameter of the pores on the first surface of the filter is less than 5 µm, particularly less than 2.5 µm, more particularly less than 1 µm, more particularly in the range of 0.25 µm to 0.5 µm.

For comparably large micro-particles, such as eukaryotic cells, the pore size can be comparably large, such as for example 5 µm. However, when micro-particles become smaller in size, it becomes necessary to provide a filter with smaller pores. While for polymer-based filters this might be achieved in various ways, for a membrane that consists of a metal, it becomes increasingly difficult to manufacture pores with outer diameters smaller than 2.5 µm.

This holds particularly true for pore sizes smaller than 0.5 µm that are particularly well-suited for the filtration of micro-particles like bacteria in the range of one micron.

According to another embodiment of the invention, the pores have a circular, elliptical shape on the first surface. Particularly circular pore shapes can discriminate the size of a micro-particle independent of the shape of the micro-particle.

Elliptical or slit-like pores, as all anisotropic pore shapes, might be used for providing or estimating an orientational or a structural information in an image analysis subsequent or prior to a Raman measurement. Furthermore, such pores allow for higher filtration speed compared to filters with the same number of pores, but in circular shape, as the ratio of solid substrate and pore area can be higher while sustaining the structural integrity of the second element.

According to another embodiment of the invention, the pores are slits or elliptical, wherein the slits or elliptical pores particularly comprise an aspect ratio of greater than two, particularly greater than four.

The aspect ratio of a slit can be defined as the length of the slit divided by the width of the slit.

A slit might be of rectangular shape. Such pores allow for higher filtration speed as compared to filters with the same number of pores, but in circular shape, as elaborated above.

According to another embodiment of the invention, the pores are arranged in a repeating pattern on the first surface, particularly in a grid, particularly wherein the pattern is a regular, repeating pattern.

This way, it is for example possible to attain all (e.g. out of frame or blocked by a micro-particle) pore positions in an image analysis of a microscopic image comprising only a single pore.

According to another embodiment of the invention, the thickness or height along the vertical axis of the membrane and particularly the thickness of the slide is in the range of 5 µm to 20 µm, particularly between 8 µm and 15 µm, more particularly 11 µm.

According to another embodiment of the invention, the first surface and/or the second surface consists of a metal, particularly nickel. The metal is not necessary the same metal as the membrane metal, but it can be of the same metal as the membrane.

If the first and second surface consists of the same metal as the membrane, the manufacturing process is particularly simple, as the slide can be manufactured from a single metal.

According to another embodiment of the invention, the membrane consists of nickel or a nickel-comprising alloy.

Nickel provides particularly advantageous properties with respect to Raman microscopy and also for filtration and manufacturing.

Nickel exhibits a comparably low Raman background, while being chemically stable. Furthermore, nickel comprises a comparably high thermal conductivity (higher than most polymers) and can be manufactured with a comparably flat surface (e.g. because it is manufactured in a galvanic process) such that the reflectivity is particularly high (as compared to a polymer) and residual signals from scattering processes on the first surface are minimized. Nickel is also magnetic.

According to another embodiment of the invention, the membrane consists of nickel of a hardness of more than 500 HV, particularly more than 600 HV. Wherein the hardness is measured by the so-called Vickers-method and thus is referred to as the Vickershardness.

In this embodiment, in addition to the membrane, also the first and second surface consist of nickel or the nickel-comprising alloy, which is advantageous due to the favorable optical and thermal properties of nickel, as explained above.

According to another embodiment of the invention, the hardness of the membrane or the slide is greater than 600 HV.

According to another embodiment of the invention, the first surface is even.

According to another embodiment of the invention, the first surface is flat, particularly wherein the root mean squared surface roughness is smaller than 0.5 µm, more particularly smaller than 0.1 µm.

Such an even first surface grants good reflectivity and that the micro-particles are arranged at almost the same level throughout the first surface particularly after filtration.

A surface that has the specified surface roughness exhibits particularly advantageous optical properties for Raman-microscopic measurements, such as a minimized amount of scattered light. Furthermore, all particles are arranged in the same optical focus plane on such a flat surface, which allows for particularly time-efficient measurements of a multitude of particles.

When the surface itself does not contain any peaks or corrugations due to a low surface roughness and/or the absence of corrugations, particle detection becomes more reliable.

According to another embodiment of the invention, the first surface has a maximum corrugation of less than 1 µm per 2 mm and less than 100 nm per 10 µm.

According to another embodiment of the invention, the membrane does not comprise gold.

Gold is particularly considered to exhibit an unsuitable Raman signal background.

According to another embodiment of the invention, the membrane comprises a melting temperature greater than 200°C.

This embodiment allows for autoclaving or other high temperature sterilizing procedures carried out on the slide without affecting its structure.

According to another embodiment of the invention the ratio of the area comprised by the pores on the first surface and the remaining, solid area that does not comprise pores of the first surface is greater than 0.02, particularly greater then 0.04, more particularly equal to or greater than 0.06 and smaller than 0.2.

This ratio allows the filtration process to be performed comparably quick, while simultaneously providing enough solid substrate so that the micro-particles can subsequently be measured with a Raman-application.

According to another embodiment of the invention, the first element comprises or is a permanent magnet or an electro-magnet.

Particularly an electro-magnet can be turned on and off, such that the removal and positioning of the second element is particularly simple and can be done without bending the membrane.

The embodiment comprising a permanent magnet is comparably simple to realize and provides a robust and reliable magnetic sample holder system.

According to another embodiment of the invention, the sample holder system comprises a third element, wherein the third element is arranged or configured to be arranged between the first element and the second element, wherein the third element comprises a first surface that is facing towards the second surface of the second element and wherein the first surface of the third element is flat, particularly comprising a root mean squared surface roughness of less than 0.1 µm.

This third element can advantageously serve as a support for the first element, such that the second element is not bending under the magnetic force but maintains a flat and even first surface even if the magnetic force acts on the second element.

According to another embodiment of the invention the third element comprises or is a glass slide.

A glass slide can be manufactured comparable even and flat, wherein for example a magnet (e.g. the first element) is more difficult to manufacture with a specified maximum surface roughness. The surface roughness of the second element or the third element in turn can influence the surface roughness or the surface corrugation of the first surface of the second element, which would negatively affect the optical and physical properties of the first surface of the second element (where the sample is located during measurement).

Thus, the third element can serve as a particularly flat and even support for the second element.

According to another embodiment of the invention, a gap extends between the first and second element, when the first and second element are arranged in the sample holder system, such that the attacking magnetic force on the second element is diminished, particularly wherein the gap is between the third element and the first element.

The gap extends particularly between and throughout the first and second element, particularly such that the second (lower) surface of the second element is not in contact with the first (upper) surface of the first element. The gap extends particularly along a horizontal plane of the sample holder system and therefore particularly orthogonal to the first and second surface of the second element, e.g. the first surface and second surface of the membrane of the filter or the first surface and second surface of the substrate slide membrane.

According to another embodiment of the invention the gap width between the first and second element is reversibly adjustable, e.g. by a dedicated means or glass slides, such as the third element, of different thickness.

According to another embodiment of the invention, the first element comprises a plurality of magnets, such that a plurality of magnetic poles exert a magnetic force on the second element.

This embodiment advantageously avoids that the particularly thin membrane of the second element is bending along the field lines - thin magnetic membranes tend to exhibit this behaviour.

By providing a plurality of magnetic poles this bending behaviour is greatly reduced.

With an electro-magnet, particularly comprised in the first element, the magnetic force acting on the second element can be adjusted.

The problem according to the invention is furthermore solved by a Raman microscope with a sample holder system according to the invention.

A generic Raman microscope particularly comprises an excitation laser, a microscope objective, a sample holder, an appropriate optical filter set for filtering out the excitation light from the Raman signal obtained by the sample, and a detector for the Raman signal. A Raman microscope can further comprise a confocal detection unit, comprising a pinhole or a device that can act as a pinhole such as for example an optical fibre. This pinhole allows for the confocal detection of a Raman signal and therefore enables a high signal to noise Raman measurement on a confocal Raman microscope.

Furthermore, a Raman microscope might comprise a scanning unit, for aligning the sample with the focus of the excitation light.

Further features and advantages of the invention shall be described by means of a detailed description of embodiments with reference to the figures. It is shown in:
- Fig. 1: a cross-section through a magnetic sample holder system according to the invention;
- Fig. 2a: a pattern of pore arrangement on the first surface of the filter;
- Fig. 2b: another pattern of pore arrangement on the first surface;
- Fig. 2c: a second element with no pores but a solid membrane and first surface; and
- Fig. 3: different kinds of background signals in Raman microscopy;

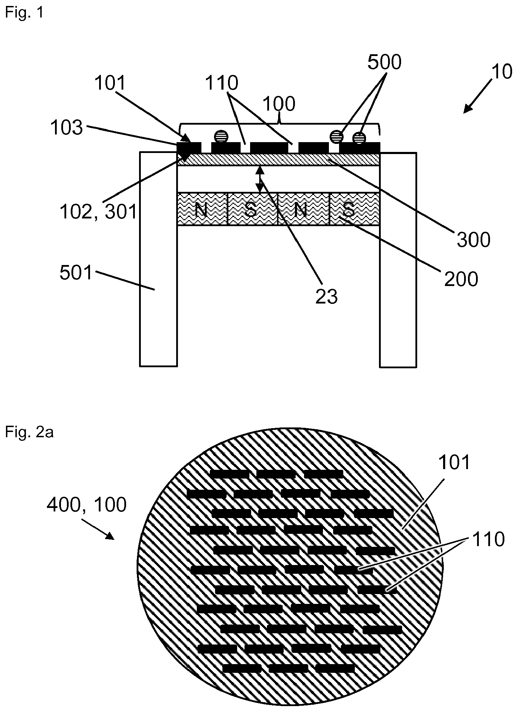

In Fig. 1 a magnetic holder system 10 according to the invention is shown in its assembled state. The magnetic holder system 10 comprises a first element 200, a second element 400, a third element 300 and a ring-shaped holding device 501.

The first element 200 is arranged in the ring-shaped holding device 501 and is located below the third element 300 and the second element 400 that are also arranged in the ring-shaped holding device 501.

The first element 200 comprises a plurality of magnetic poles (N, S, N, S), e.g. a plurality of magnets.

In an adjustable distance of 0.2 mm to 10 mm over a first surface of the first element 200, the third element 300 is arranged. Between the first and third element 200, 300 there is a gap 23 of several millimeters or hundreds of microns.

The third element 300 is a glass slide that has a thickness of 0.1 mm to 2 mm. In the example of Fig. 1 the glass slide has a thickness of 0.5 mm. A glass slide provides a very even and flat surface and is therefore particularly well-suited to provide an even support for the second element 400 that can be a substrate slide or a filter according to the invention.

In the example shown in Fig. 1, the first element is a filter. The filter comprises a membrane 103, a first surface 101 and a second surface 102. The membrane 103, the first and second surface 101, 102 are integrally connected in this example (i.e. are formed from the same material). Pores 110 extend from the first surface 101 to the second surface 102.

The membrane 103 has total thickness of 11 µm, wherein the thickness is composed of 10 µm thickness of the initial membrane thickness and 1 µm due to a galvanic growth process of the membrane during manufacturing.

The membrane 103 is of circular shape (not shown) configured to fit to the ring-shaped holding device 501 and has a diameter of 13 mm. The pores 110 are slits (0.4 µm wide and 30 µm long) and are distributed over the membrane 103 with a density of 1600 slits per mm2.

Thus, the fraction of the pore area on the first surface 101 and the area of the first surface 101 (without the pores) is in the order 6%, which provides a sufficiently high filter throughput for most applications.

On the first surface 101 of the filter, the micro-particles 500 are located for measuring their Raman spectrum.

The first surface 101 of the filter is even and corrugations of the first surface 101 are less than 1 µm. The surface roughness is below 0.1 µm.

The difference between surface roughness and corrugations lies particularly in their relevant length scale. While corrugations are measured on a length scale of e.g. 2 mm the surface roughness is estimated on length scales in the order of 10 µm. Thus, roughness can be compared to a noise around a mean level value of the surface wherein corrugations can be considered as long-distance changes of the mean level of the first surface 101.

Both roughness and corrugations should be kept at a minimum for most Raman applications, especially when small particles are of interest.

A particularly suitable material for the filter is nickel. In this example the filter consists of nickel, exhibiting a hardness of approximately 600 HV.

Nickel can be manufactured with smooth and flat surfaces as specified above and is furthermore well suited for Raman applications, as nickel exhibits favorable background signal properties, as for example compared to gold or aluminum.

Furthermore, nickel exhibits a high reflectance (>60%) in the optical region of 400 nm to 800 nm, particularly at 532 nm and also has a comparably high thermal conductivity (i.e. 85 W/(m·K)) as compared to e.g. polymer-based filters for similar applications.

The fact that the filter consists of nickel and is not only coated with nickel contributes to the favorable properties as a sample substrate for Raman applications.

Thus, the filter can be used for filtration of the sample and after filtration the filter can be used as a sample substrate in the sample holder system 10.

Other types of filters do not provide such advantages, as for example metal coated filters do exhibit a higher background signal in Raman applications, because also the coated material contributes to the Raman background.

Often times the coated filters are more difficult to manufacture, as they require more manufacturing steps.

The magnetic first element 200 exerts a magnetic force on the filter that keeps the filter in place. The strength of the magnetic force can be adjusted by the size of the gap 23 between the first element 200 and the filter. The glass slide provides an even support for the filter in order to avoid corrugations of the membrane 103 due to its bending in the magnetic field.

The plurality of magnetic poles is advantageous, as the tendency of the membrane 103 to build up corrugations along the field lines of the magnet field is reduced by the presence of a plurality of magnetic poles, i.e. more poles of the same name (in contrast to a single magnet exhibiting only a single north and a single south pole).

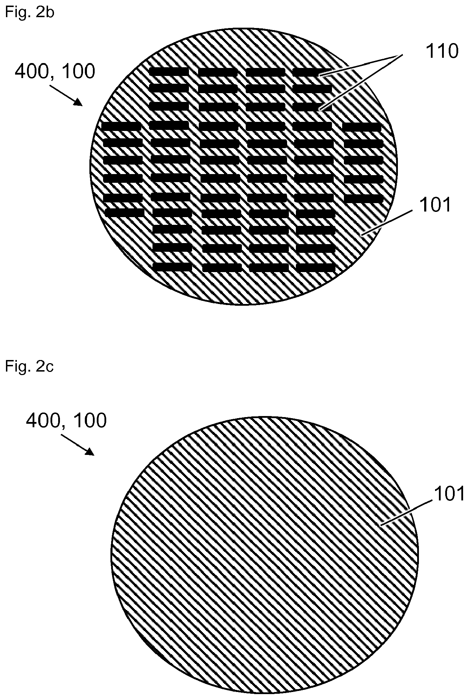

In Fig. 2a and Fig. 2b top views of the second element 400 in form of a filter, and thus of the first surface 101 of two different embodiments of the filter are shown. On the first surface 101 the pores 110 are arranged in a regular pattern. In Fig. 2a a pattern is shown where the pores 110 are arranged similar to the pattern of bricks in a wall, wherein in Fig. 2b the pores 110 are arranged along vertical and horizontal lines.

The pores 110 in both patterns are formed as slits, wherein the slits have a length of 30 µm and a width of 0.4 µm. Thus the aspect ratio is around 75. The spacing between the pores 110 is 10 µm.

Due to the specific shape and repeating, regular arrangement of the pores 110 on the first surface 101, it is possible to estimate the positions of all slits if only a single slit is detected in a microscopic image of the first surface 101. This is an advantageous feature for many microscopic applications.

In Fig. 2c a second element 400 is shown that consists of Nickel and does not comprises any pores, but extends evenly and flat along a plane of extend.

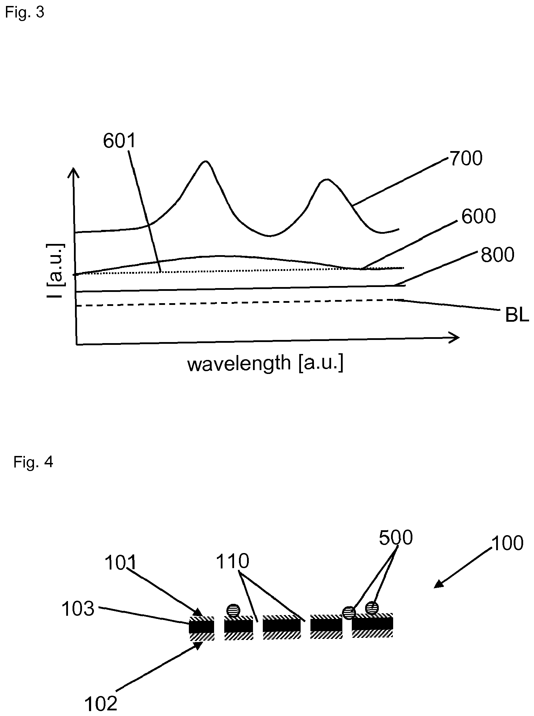

In Fig. 4 a similar second element 400 is shown as in Fig. 1, with the difference that the first surface 101 and the second surface 102 are now formed as additional layers of the membrane 103. The first surface 101 can for example be a metal alloy or a biocompatible or bio-adhesive coating. The second surface 102 can provide additional support to the membrane 103.

Fig. 3 schematically shows various Raman backgrounds BL, 800, 600, 700 as a function of wavelength for various substrates.

The baseline signal BL is depicted as a broken line. The baseline signal BL is essentially horizontal as it is obtained by a measurement without any sample or substrate. The baseline signal BL can used as a reference for all background Raman signals 600, 700, 800.

An ideal sample substrate would only offset the baseline signal BL by a low constant value (cf. solid horizontal line 800).

The background signal of comparably well-suited substrate (cf. solid line with a slight wave 600) in turn shows only a slight deviation from the ideal substrate behavior, by exhibiting a small increase in background for shorter wavelength and a higher offset. The deviation from the ideal behavior is indicated by the dotted line 601. Nickel has even better properties and is closer to the ideal baseline signal BL than to the well-suited substrate signal 600.

A substrate that is not well-suited for Raman applications is shown as well in Fig. 3 (cf. wavy, solid line 700). Such a substrate exhibits its own distinct Raman spectrum, with various features. These features do interfere with the detection or quantification of the Raman signal of the sample.

A suitable sample substrate or material is for example a substrate that fulfills the following requirements (definition of a comparable low Raman background signal):
- the background signal of the substrate is not higher than 1.2 times the baseline signal BL (measured by the same illumination intensity and comparable measurement conditions).
- The background signal of the substrate is essentially feature-less, that is the full width at half maximum of any features is larger than 500 wavenumbers.
- The maximum height of any feature of the background signal with respect to the mean background signal is at most 0.05 times the baseline signal.

## Claims

1. A magnetic sample holder system (10) for Raman microscopy on a Raman microscope, comprising:
- a first element (200), wherein the first element (200) is configured to create a magnetic force,
- at least one second element (400), wherein the second element (400) is magnetic or magnetizable such that, when the first element (200) creates the magnetic force, the second element (400) is fixable or fixed to the sample holder system (10) by means of the magnetic force,
wherein the at least one second element (400) comprises or is a slide (100) comprising a first planar surface (101) for receiving a sample, a second surface (102) and a membrane (103), wherein the membrane consists of a magnetic metal, wherein the first and the second element (200, 400) are arranged along a vertical axis of the magnetic sample holder system (10), along which a sample arranged on the second element can be excited by Raman-excitation from a Raman-microscope.

2. A magnetic sample holder system (10) according to claim 1, wherein the second element (100) is devoid of holes or pores at least in an area that is configured to receive a sample.

3. A magnetic sample holder system (10) according to claim 1, wherein the second element (400) is designed for surface filtration of a liquid comprising the micro-particles (500), wherein the slide (100) comprises pores (110) extending from the first surface (101) through the membrane (103) to the second surface (102), wherein the size and shape of the pores (110) on the first surface (101) is such that the micro-particles (500) cannot pass through the pores (110).

4. A magnetic sample holder system (10) according to claim 3, wherein an outer diameter of the pores (110) on the first surface (101) of the a slide (100) is less than 5 µm, particularly less than 2.5 µm, more particularly less than 1 µm, more particularly in the range of 0.25 µm to 0.5 µm.

5. A magnetic sample holder system (10) according to claim 3 or 4, wherein the pores (110) are circular, elliptical, and/or slits, particularly wherein the slits comprise an aspect ratio of greater than two, particularly greater than four.

6. A magnetic sample holder system (10) according to one of the claims 3 to 5, wherein the pores (110) are arranged in a repeating pattern on the first surface (101), particularly in a grid.

7. A magnetic sample holder system (10) according to one of the preceding claims, wherein the thickness of the membrane (103) and particularly the thickness of the slide (100) is in the range of 5 µm to 20 µm.

8. A magnetic sample holder system (10) according to one of the preceding claims, wherein the first and/or second surface (101, 102) consist of a metal, particularly the same metal as the membrane (103).

9. A magnetic sample holder system (10) according to one of the preceding claims, wherein the membrane (103) consists of nickel or a nickel-comprising alloy, particularly wherein the hardness of the membrane (103) or the slide (100) is greater than 600 HV.

10. A magnetic sample holder system (10) according to one of the preceding claims, wherein the first surface (101) is flat, particularly wherein the root mean squared surface roughness is smaller than 0.5 µm, more particularly smaller than 0.1 µm.

11. A magnetic sample holder system (10) according to one of the preceding claims, wherein the membrane (103) comprises a melting temperature greater than 200°C.

12. A magnetic sample holder system (10) according to one of the claim 3 to 11, wherein the ratio of the area comprised by the pores (110) on the first surface (101) and the area of the first surface (101) is greater than 0.02, particularly greater then 0.04, more particularly equal to or greater than 0.06 and/or smaller than 0.4.

13. Sample holder system according to one of the preceding claims, wherein the first element (200) comprises or is a permanent magnet or an electro-magnet.

14. Sample holder system according to one of the preceding claims, wherein the sample holder system comprises a third element (300), wherein the third element (300) is arranged or configured to be arranged between the first (200) and the second element (400), wherein the third element (300) comprises a first surface (301) that is facing towards a second surface (102) of the second element (400) and wherein the first surface (301) of the third element is flat, particularly comprising a root mean squared surface roughness of less than 0.1 µm.

15. Sample holder system according to one of the preceding claims, wherein a gap (23), particularly an air gap, is located between the first (200) and second element (400), such that the attacking magnetic force on the second element (400) is diminished, particularly wherein the gap (23) is located between the third element (300) and the first element (200), particularly wherein the width of this gap is manually adjustable such as to control the effective magnetic fixation force of the second element (400).
